# EUROPÄISCHE PATENTSCHRIFT

(11) **EP 0 865 853 B1**
(45) Veröffentlichungstag und Bekanntmachung des Hinweises auf die Patenterteilung: **05.04.2000**
(21) Anmeldenummer: 97100669.7
(22) Anmeldetag: 17.01.1997
(51) Int. Cl.: B23B 31/16

(54) **Kraftbetätigtes Spannfutter**
Power actuated chuck
Mandrin à commande motorisée

(43) Veröffentlichungstag der Anmeldung: 23.09.1998
(73) Patentinhaber: FORKARDT Deutschland GmbH, 40699 Erkrath (DE)
(72) Erfinder: Antoni, Herbert, Dipl.-Ing., 41472 Neuss (DE)
(74) Vertreter: Stenger, Watzke & Ring Patentanwälte

(56) Entgegenhaltungen:
- DE-A- 2 605 299
- DE-C- 3 822 506
- US-A- 5 522 607

## Beschreibung

Die Erfindung betrifft ein kraftbetätigtes Spannfutter mit einem Futterkörper und in radialen Führungen des Futterkörpers verschiebbar geführten Spannbacken, die durch mindestens ein im Futterkörper angeordnetes Antriebsglied von einem Krafterzeuger antreibbar sind.

Derartige kraftbetätigte Spannfutter sind in einer Mehrzahl von Ausführungen bekannt. Üblicherweise werden die entweder einstückig ausgeführten oder zweiteilig aus Grund- und Aufsatzbacke ausgebildeten Spannbacken von einem axial verschiebbar im Futterkörper angeordneten Futterkolben betätigt, der seinerseits von einem Krafterzeuger angetrieben wird. Die Verbindung zwischen dem Futterkolben und den Spannbacken erfolgt vorzugsweise über Keilhaken oder Hebel.

Die mit diesen kraftbetätigten Spannfuttern erzielbaren Spannkräfte und insbesondere die Wiederholgenauigkeit der Größe der durch den druckmittelbetätigten Krafterzeuger erzeugten Spannkraft hängt stark vom jeweiligen Schmierzustand der Gleitflächen ab, die zwischen dem Krafterzeuger und den in radialen Führungen des Futterkörpers verschiebbar geführten Spannbacken und zwischen den Spannbacken und dem Futterkörper vorgesehen sind.

Um einen möglichst gleichbleibenden Schmierzustand der Antriebsteile derartiger kraftbetätigter Spannfutter zu gewährleisten, ist es aus der DE 38 22 506 C1 bekannt, im Futterkörper des Spannfutters mindestens einen mit Schmierfett befüllbaren Hohlraum auszubilden, der über Schmierbohrungen mit zumindest einigen der Gleitflächen des Spannfutters in Verbindung steht. In diesen Hohlraum ragt mindestens ein beim Antrieb der Spannbacken bewegtes Futterbauteil zur Erzeugung einer das Schmierfett in die Schmierbohrungen drückenden Pumpbewegung hinein, vorzugsweise ein Fliehkraft-Ausgleichsgewicht eines Fliehkraftausgleichfutters.

Durch die zwischen dem mit Schmierfett befüllbaren Hohlraum im Futterkörper und den einzelnen Gleitflächen verlaufenden Schmierbohrungen besteht bei dem bekannten Spannfutter die Gefahr, daß durch eine Verstopfung dieser langen, engen und teilweise umgelenkten Schmierbohrungen die Versorgung der wichtigsten Gleitflächen des Spannfutters mit Schmierfett unterbleibt.

Der Erfindung liegt deshalb die **Aufgabe** zugrunde, ein kraftbetätigtes Spannfutter der eingangs beschriebenen Art zu schaffen, dessen wichtigste Gleitflächen zuverlässig mit Schmierfett versorgt werden.

Die **Lösung** dieser Aufgabenstellung durch die Erfindung ist dadurch gekennzeichnet, daß im mittleren Bereich der radialen Backenführungen des Futterkörpers jeweils eine einen mit Schmierfett befüllbaren Hohlraum bildende Aussparung ausgebildet ist.

Diese im mittleren Bereich der radialen Backenführungen des Futterkörpers ausgebildete Aussparung sorgt bei einer Befüllung mit Schmierfett zuverlässig für einen gleichbleibenden Schmierzustand dieser für das kraftbetätigte Spannfutter wichtigsten Gleitflächen, da die mit den radialen Backenführungen des Futterkörpers zusammenwirkenden Führungsteile der Spannbacken unmittelbar in den mit Schmierfett befüllten Hohlraum hineinragen und auf diese Weise bei einer radialen Bewegung der Spannbacken ständig und zuverlässig für eine Schmierung der radialen Backenführungen sorgen. Da die erfindungsgemäßen Aussparungen im mittleren Bereich der radialen Backenführungen des Futterkörpers ausgebildet sind, ist die mit der Ausbildung der Aussparung verbundene Reduzierung der Führungsflächen für die Stützwirkung der Backenführung unschädlich, da sich die Spannbacken sowohl bei einer Außenspannung als auch bei einer Innenspannung wechselseitig am radial innenliegenden sowie radial außenliegenden Ende der Radialführungen des Futterkörpers abstützen und der mittlere Teil dieser radialen Backenführungen für die Stützwirkung nicht benötigt wird. Die Ausbildung der erfindungsgemäßen, einen mit Schmierfett befüllbaren Hohlraum bildenden Aussparung im Bereich jeder radialen Backenführung des Futterkörpers hat somit keine nachteilige Auswirkung auf die Stützwirkung der Backenführungen und damit auf die Belastbarkeit des kraftbetätigten Spannfutters.

Gemäß einer bevorzugten Ausführung der Erfindung mündet in jeder Aussparung mindestens ein im Futterkörper ausgebildeter Schmierkanal, so daß der durch die Aussparung im mittleren Bereich der radialen Backenführungen gebildete Hohlraum jederzeit mit Schmierfett gefüllt bzw. nachgefüllt werden kann.

Zu diesem Zweck kann erfindungsgemäß entweder das außenliegende Ende des Schmierkanals an eine Zentralschmierung angeschlossen oder am außenliegenden Ende des Schmierkanals ein Schmiernippel angeordnet sein. Dieser befindet sich vorzugsweise in einer Aussparung im Umfangsbereich des Futterkörpers. Alternativ kann gemäß einer weiteren Ausführung der Erfindung das der Aussparung abgewandte Ende des Schmierkanals mit einer mit Schmierfett befüllbaren Kammer verbunden sein, die gemäß dem eingangs beschriebenen Stand der Technik im Futterkörper ausgebildet ist und in die mindestens ein beim Antrieb der Spannbacken bewegtes Futterbauteil zur Erzeugung einer das Schmierfett aus der Kammer in mindestens eine Aussparung drückende Pumpbewegung hineinragt. Vorzugsweise ist das in die Kammer hineinragende Futterbauteil ein Ausgleichsgewicht einer Fliehkraft-Ausgleichseinrichtung.

Mit der Erfindung wird ein kraftbetätigtes Spannfutter geschaffen, dessen für die erzielbaren Spannkräfte und für die Wiederholgenauigkeit der Größe der durch den druckmittelbetätigten Krafterzeuger erzeugten Spannkraft wichtigste Gleitflächen, nämlich die radialen Backenführungen zwischen Futterkörper und Spannbacken zuverlässig mit Schmierfett versorgt werden, ohne daß hierfür ein großer konstruktiver Aufwand erforderlich ist.

Auf der Zeichnung sind zwei Ausführungsbeispiele des erfindungsgemäßen Spannfutters dargestellt, und zwar zeigt:
- Fig. 1: eine perspektivische Explosionszeichnung eines ersten Ausführungsbeispiels des erfindungsgemäßen Spannfutters,
- Fig. 2: einen Längsschnitt durch eine als Fliehkraft-Ausgleich-Futter ausgeführte zweite Ausführungsform,
- Fig. 3: eine teilweise Stirnansicht gemäß dem Pfeil III in Fig. 2 und
- Fig. 4: einen sekantialen Schnitt gemäß der Schnittlinie IV-IV in Fig. 3.

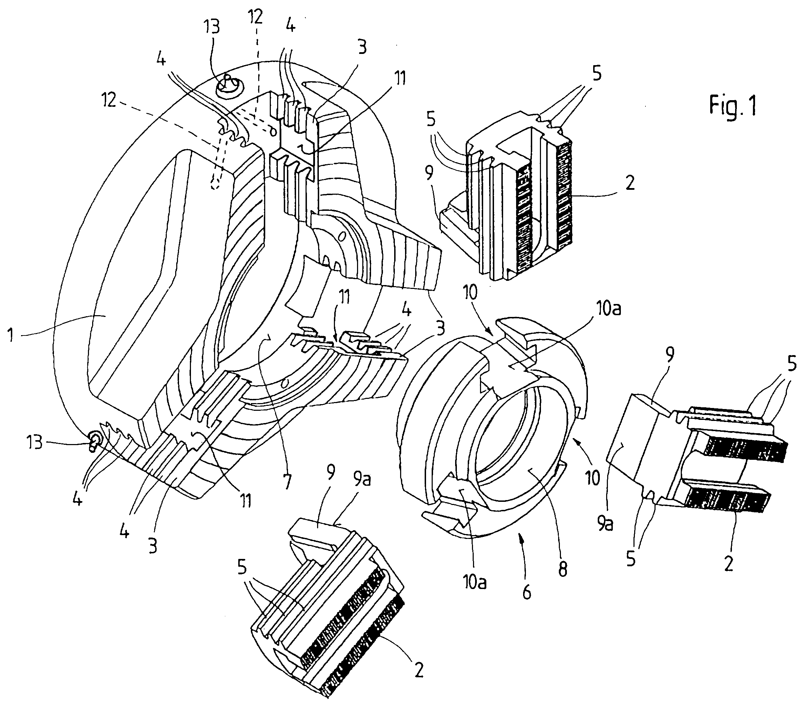

Das in Fig. 1 als erstes Ausführungsbeispiel dargestellte Spannfutter weist einen Futterkörper 1 auf, in dem drei Spannbacken 2 radial verschiebbar in Backenführungen 3 geführt sind. Zu diesem Zweck sind in den einander gegenüberliegenden Seitenflächen der Backenführungen 3 eine Mehrzahl von Führungsnuten 4 sowie auf den Seitenflächen der Spannbacken 2 diesen Führungsnuten 4 entsprechende Führungsleisten 5 ausgebildet, die mit den Führungsnuten 4 zusammenwirken. Die radiale Verstellung der Spannbacken 2 geschieht durch einen Spannkolben 6, der in einer Bohrung 7 des Futterkörpers 1 in axialer Richtung verschiebbar ist. Zur Aufnahme von zu bearbeitenden Werkstücken weist der in der Bohrung 7 des Futterkörpers 1 angeordnete Spannkolben 6 eine mittige Durchgangsbohrung 8 auf.

Jede Spannbacke 2, welche im dargestellten Ausführungsbeispiel als Grundbacke ausgebildet ist, weist an ihrem radial innenliegenden hinteren Teil einen im Querschnitt T-förmigen Keilhaken 9 auf, der zur Radialverstellung der Spannbacken 2 über den Spannkolben 6 in entsprechend ausgestaltete Keilnuten 10 des Spannkolbens 6 einsetzbar ist. Zur Führung des Keilhakens 9 der Spannbacke 2 in der Keilnut 10 des Spannkolbens 6 ist der radial innenliegende hintere Teil des Keilhakens 9 mit einer durchgehenden Keilfläche 9a ausgebildet, die mit einer ebenfalls durchgehenden Keilfläche 10a der Keilnut 10 des Spannkolbens 6 zusammenwirkt.

Wie aus Fig. 1 ersichtlich, verlaufen die auf den Seitenflächen der Spannbacken 2 ausgebildeten Führungsleisten 5 im frontseitigen Teil der Spannbacke 2 über die gesamte Länge der Spannbacke 2, wohingegen im hinteren Teil der Spannbacke 2 die Führungsleisten 5 aufgrund der Ausbildung des Keilhakens 9 verkürzt ausgebildet sind. Als besonders vorteilhafte Form für die Ausbildung der Führungsleisten 5 hat sich ein trapezförmiges Querschnittsprofil erwiesen. Durch die Ausbildung der im frontseitigen Teil der Spannbacken 2 verlaufenden Führungsleisten 5 über die gesamte Länge der Spannbacken 2 wird erreicht, daß die beim Innenspannen von Werkstücken auftretenden hohen Kippmomente von der gesamten Länge der Spannbacken 2 über die Führungsleisten 5 und die Führungsnuten 4 aufgenommen werden können und somit keine unzulässig hohen, einen erhöhten Verschleiß zur Folge habenden Flächenpressungen auftreten können.

Um die durch die Führungsnuten 4 und Führungsleisten 5 gebildeten Gleitflächen des Spannfutters zuverlässig mit Schmierfett zu versorgen, ist jeweils im mittleren Bereich jeder radialen Backenführung 3 eine Aussparung 11 vorgesehen, in der ein Schmierkanal 12 mündet. Beim ersten Ausführungsbeispiel ist dieser Schmierkanal 12 gemeinsam mit dem benachbarten Schmierkanal 12 am außenliegenden Ende an einen Schmiernippel 13 angeschlossen. Die Schmierkanäle können aber auch mit einer Zentralschmierung verbunden sein.

Durch Befüllen der Aussparungen 11 mit Schmierfett wird bei jeder radialen Bewegung der in die Aussparungen 11 hineinragenden Führungsleisten 5 der Spannbacken 2 Schmierfett mitgenommen und den Führungsnuten 4 des Futterkörpers 1 zugeführt. Hierdurch ergibt sich eine dauerhafte und zuverlässige Schmierung dieser für die erzielbare Spannkraft und Wiederholgenauigkeit wichtigsten Gleitflächen des Spannfutters. Da die Aussparungen 11 im mittleren Bereich der radialen Backenführungen 3 des Futterkörpers 1 ausgebildet sind, ist die mit der Ausbildung der Aussparung 11 verbundene Reduzierung der Führungsflächen für die Stützwirkung der Backenführung 3 unschädlich, da sich die Spannbacken 2 sowohl bei einer Außenspannung als auch bei einer Innenspannung wechselseitig am radial innenliegenden sowie radial außenliegenden Ende der Radialführungen des Futterkörpers 1 abstützen und der mittlere Teil dieser radialen Backenführungen 3 für die Stützwirkung nicht benötigt wird. Die im mittleren Bereich der radialen Backenführungen 3 im Futterkörper 1 vorgesehenen Aussparungen 11 haben somit keine nachteilige Auswirkung auf die Stützwirkung der Backenführungen 3 und damit auf die Belastbarkeit des kraftbetätigten Spannfutters.

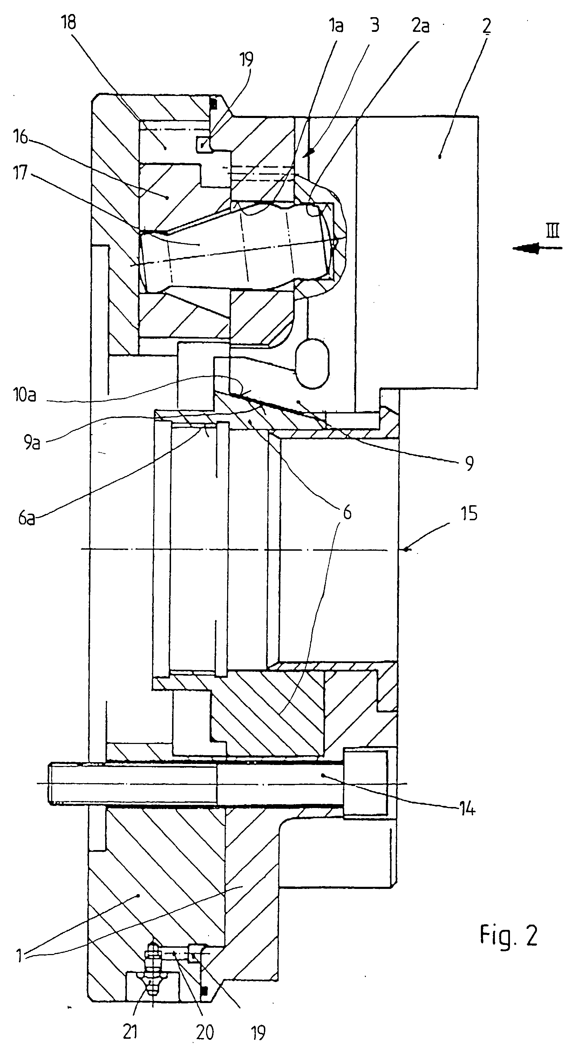

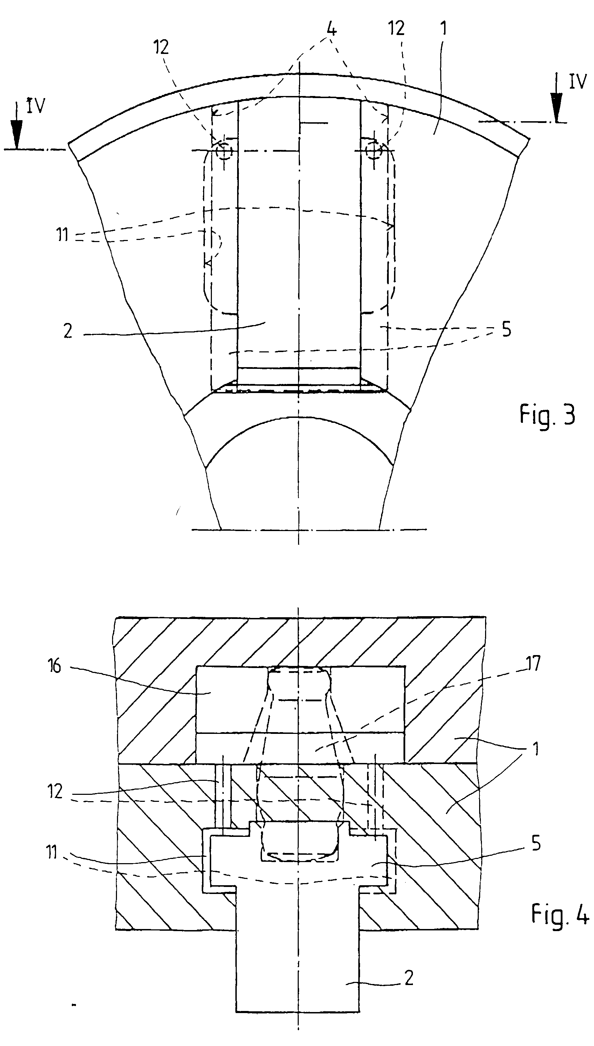

Das in den Fig. 2 bis 4 dargestellte zweite Ausführungsbeispiel zeigt ein als Fliehkraft-Ausgleich-Futter ausgebildetes Spannfutter. Auch dieses Spannfutter hat einen Futterkörper 1 , der mittels Schrauben 14 am nicht dargestellten Flansch einer drehend antreibbaren Werkzeugmaschinenspindel befestigt wird. In radialen Backenführungn 3 dieses Futterkörpers 1 sind auch bei diesem Ausführungsbeispiel drei Spannbacken 2 verschiebbar geführt; wegen des Schnittverlaufes ist von diesen drei Spannbacken 2 lediglich eine zu erkennen. Jede dieser Spannbacken 2 steht über einen Keilhaken 9 mit einem die Keilhaken 9 in entsprechenden Keilnuten 10 aufnehmenden Spannkolben 6 in Verbindung, der wiederum in axialer Richtung verschiebbar im Futterkörper 1 geführt und mit einem Innengewinde 6a versehen ist, über das er mit einer auf der Zeichnung nicht dargestellten Betätigungsstange verbunden wird, die ihrerseits mit dem ebenfalls nicht dargestellten Krafterzeuger in Verbindung steht, beispielsweise mit dem Kolben eines druckmittelbetätigten Zylinders, der am anderen Ende der Werkzeugmaschinenspindel angeordnet ist.

Da der Spannkolben 6 mit den Keilhaken 9 der Spannbacken 2 über die Keilflächen 9a und 10a in Verbindung steht, die zur Drehachse 15 des Spannfutters unter einem spitzen Winkel verlaufen, ergibt eine axiale Verschiebung des Spannkolbens 6 eine radiale Verstellbewegung der Spannbacken 2.

Um die bei hohen Drehzahlen des Spannfutters auf die Spannbacken 2 einwirkenden Fliehkräfte zu beseitigen bzw. erheblich zu verringern, sind beim zweiten Ausführungsbeispiel Ausgleichsgewichte 16 vorgesehen. Jeder Spannbacke 2 ist ein derartiges Ausgleichsgewicht 16 zugeordnet, wobei das Ausgleichsgewicht 16 mittig hinter der Spannbacke 2 im Futterkörper 1 angeordnet ist und über einen in einer Bohrung 1a des Futterkörpers 1 abgestützten Hebel 17 mit der Spannbacke 2 verbunden ist. Die Zeichnung zeigt, daß dieser Hebel 17 mit seinem vorderen Ende in eine Anbohrung 2a der Spannbacke 2 eingreift, wogegen sein hinteres Ende beweglich im Ausgleichsgewicht 16 angeordnet ist. Die auf die Spannbacke 2 radial nach außen wirkende Fliehkraft wird auf diese Weise durch eine entsprechende Kraft kompensiert, die aufgrund der auf das Ausgleichsgewicht 16 wirkenden Fliehkraft den Hebel 17 belastet, so daß dieser in zentripetaler Richtung die Spannbacke 2 belastet. Auf diese Weise kann zumindest ein Großteil der auf die Spannbacke 2 einwirkenden Fliehkraft kompensiert werden.

Auch beim zweiten Ausführungsbeispiel sind im mittleren Bereich der durch eine Führungsnut 4 im Futterkörper 1 und eine entsprechende Führungsleiste 5 an der Spannbacke 2 gebildeten Backenführungen 3 Aussparungen 11 vorgesehen, die einen mit Schmierfett gefüllten Hohlraum bilden, in den der mittlere Teil der jeweiligen Führungsleiste 5 hineinragt. Jede Aussparung 11 steht über einen Schmierkanal 12 mit einem Hohlraum 18 in Verbindung, der für die Aufnahme eines Ausgleichsgewichtes 16 im Futterkörper 1 ausgebildet und der mit Schmierfett gefüllt ist. Dieses Schmierfett wird bei einer Bewegung der Spannbacken 2 und damit der Ausgleichsgewichte 16 durch den Schmierkanal 12 in die zugehörige Aussparung 11 gedrückt und versorgt diese somit mit Schmierfett.

Die für die Ausgleichsgewichte 16 vorgesehenen Hohlräume 18 im Futterkörper 1 sind beim Ausführungsbeispiel miteinander durch einen im Futterkörper 1 umlaufenden Ringkanal 19 verbunden. An diesen Ringkanal 19 ist über einen Versorgungskanal 20 ein Schmiernippel 21 angeschlossen, über den die Hohlräume 18 mit Schmierfett versorgt werden können.

Vor einer Inbetriebnahme des Spannfutters werden die Hohlräume 18 über den Schmiernippel 21, den Versorgungskanal 20 und den Ringkanal 19 mit Schmierfett gefüllt. Wenn das Spannfutter anschließend zum Einspannen eines Werkstückes, beispielsweise für eine Außenspannung, verwendet wird und hierbei die Ausgleichsgewichte 16 radial nach außen bewegt werden, erfolgt eine Verkleinerung der Hohlräume 18 durch die Ausgleichsgewichte 16. Hierdurch wird im Hohlraum 18 befindliches Schmierfett durch den zugehörigen Schmierkanal 12 in die zugehörige Aussparung 11 gedrückt, wo es für die Schmierung der Backenführungen 3 zur Verfügung steht. Dieser Schmiervorgang wiederholt sich zwangsweise bei jeder Spannbewegung der Spannbacken 2, so daß die Backenführungen 3 zwischen Spannbacken 2 und Futterkörper 1 zwangsweise geschmiert und damit in einem gleichbleibend guten Schmierzustand gehalten werden. Bei jedem Spann- und Schmiervorgang wird ein Teil des Schmierfettes auch durch vorhandene Fugen radial nach innen gedrückt. Dieses Schmierfett wandert unter dem Einfluß der Fliehkraft bei einer Rotation des Spannfutters zurück in die Hohlräume 18, so daß diese regelmäßig wieder aufgefüllt werden. Erst wenn nach längerer Einsatzzeit der Großteil des Schmierfettes aus den Hohlräumen 18 verbraucht ist, wird eine Auffüllung der Hohlräume 18 von außen über den Schmiernippel 21 erforderlich.

### Bezugszeichenliste

- 1: Futterkörper
- 1a: Bohrung
- 2: Spannbacke
- 2a: Anbohrung
- 3: Backenführung
- 4: Führungsnut
- 5: Führungsleiste
- 6: Spannkolben
- 6a: Innengewinde
- 7: Bohrung
- 8: Durchgangsbohrung
- 9: Keilhaken
- 9a: Keilfläche
- 10: Keilnut
- 10a: Keilfläche
- 11: Aussparung
- 12: Schmierkanal
- 13: Schmiernippel
- 14: Schraube
- 15: Drehachse
- 16: Ausgleichsgewicht
- 17: Hebel
- 18: Hohlraum
- 19: Ringkanal
- 20: Versorgungskanal
- 21: Schmiernippel

## Patentansprüche

1. Kraftbetätigtes Spannfutter mit einem Futterkörper (1) und in radialen Führungen des Futterkörpers (1) geführten Spannbacken (2), die durch mindestens ein im Futterkörper (1) angeordnetes Antriebsglied (6) von einem Krafterzeuger antreibbar sind,
**dadurch gekennzeichnet,**
daß im mittleren Bereich der radialen Backenführungen (3) des Futterkörpers (1) jeweils eine einen mit Schmierfett befüllbaren Hohlraum bildende Aussparung (11) ausgebildet ist.

2. Spannfutter nach Anspruch 1, dadurch gekennzeichnet, daß in jeder Aussparung (11) mindestens ein im Futterkörper (1) ausgebildeter Schmierkanal (12) mündet.

3. Spannfutter nach Anspruch 1 und 2, dadurch gekennzeichnet, daß am außenliegenden Ende des Schmierkanals (12) ein Schmiernippel (13) angeordnet ist.

4. Spannfutter nach Anspruch 1 und 2, dadurch gekennzeichnet, daß das außenliegende Ende des Schmierkanals (12) an eine Zentralschmierung des Spannfutters angeschlossen ist.

5. Spannfutter nach Anspruch 1 und 2, dadurch gekennzeichnet, daß das der Aussparung (11) abgewandte Ende des Schmierkanals (12) mit einer mit Schmierfett befüllbaren Kammer (18) verbunden ist, die im Futterkörper (1) ausgebildet ist und in die mindestens ein beim Antrieb der Spannbacken (2) bewegtes Futterbauteil (16) zur Erzeugung einer das Schmierfett aus der Kammer (18) in mindestens eine Aussparung (11) drückende Pumpbewegung hineinragt.

6. Spannfutter nach Anspruch 5, dadurch gekennzeichnet, daß das in die Kammer (18) hineinragende Futterbauteil ein Ausgleichsgewicht (16) einer Fliehkraft-Ausgleichseinrichtung ist.

## Claims

1. Power-operated chuck with a chuck body (1) and chuck jaws (2) which are guided in radial guides of the chuck body (1) and can be driven by a power generator via at least one driving member (6) arranged in the chuck body (1), characterized in that a recess (11) that forms a cavity which can be filled with lubricating grease is formed in the central region of each of the radial jaw guides (3) of the chuck body (1).

2. Chuck according to Claim 1, characterized in that at least one lubricating passage (12) formed in the chuck body (1) opens into each recess (11).

3. Chuck according to Claim 1 and 2, characterized in that a lubricating nipple (13) is arranged at the outer end of the lubricating passage (12).

4. Chuck according to Claim 1 and 2, characterized in that the outer end of the lubricating passage (12) is connected to a centralized lubrication system of the chuck.

5. Chuck according to Claim 1 and 2, characterized in that the end of the lubricating passage (12) remote from the recess (11) is connected to a chamber (18) which can be filled with lubricating grease, which is formed in the chuck body (1) and into which at least one chuck component (16) which is moved when the chuck jaws (2) are driven projects to produce a pumping motion which forces the lubricating grease out of the chamber (18) into at least one recess (11).

6. Chuck according to Claim 5, characterized in that the chuck component (16) projecting into the chamber (18) is a balance weight of a centrifugal-force balancing device.

## Revendications

1. Mandrin à commande motorisée comportant un corps de mandrin (1) et des mâchoires de serrage (2) guidées dans des guides radiaux du corps de mandrin (1), lesquelles peuvent être actionnées par un générateur de force par l'intermédiaire d'au moins un organe d'actionnement (6) disposé dans le corps de mandrin (1),
caractérisé en ce qu'un évidement (11) formant un espace creux pouvant être rempli de graisse lubrifiante est réalisé dans la zone médiane de chacun des guides de mâchoire radiaux (3) du corps de mandrin (1).

2. Mandrin selon la revendication 1, caractérisé en ce qu'au moins un canal de lubrification (12) réalisé dans le corps de mandrin (1) débouche dans chaque évidement (11).

3. Mandrin selon les revendications 1 et 2, caractérisé en ce qu'un raccord de lubrification (13) est disposé à l'extrémité extérieure du canal de lubrification (12).

4. Mandrin selon les revendications 1 et 2, caractérisé en ce que l'extrémité extérieure du canal de lubrification (12) est raccordée à un dispositif central de lubrification du mandrin.

5. Mandrin selon les revendications 1 et 2, caractérisé en ce que l'extrémité du canal de lubrification (12) située côté opposé à l'évidement (11) peut être reliée à une chambre (18) pouvant être remplie avec de la graisse lubrifiante qui est réalisée dans le corps de mandrin (1) et dans laquelle au moins une des pièces de mandrin (16) mue lors de l'actionnement des mâchoires de serrage (2) pénètre afin de produire un mouvement de pompage qui pousse la graisse lubrifiante hors de la chambre (18) jusque dans au moins un évidement (11) .

6. Mandrin selon la revendication 5, caractérisé en ce que la pièce de mandrin qui pénètre dans la chambre (18) est une masse d'équilibrage (16) d'un dispositif à équilibrage centrifuge.
